# EUROPÄISCHE PATENTSCHRIFT

(11) **EP 4 431 880 B1**
(45) Veröffentlichungstag und Bekanntmachung des Hinweises auf die Patenterteilung: **19.08.2026**
(21) Anmeldenummer: 23161558.4
(22) Anmeldetag: 13.03.2023
(51) Int. Cl.: G01D 11/30, G01K 1/00, G01K 1/14, G01K 13/02

(54) **ANORDNUNG ZUR LÖSBAREN BEFESTIGUNG EINES MESSELEMENTS AN EINEM GRUNDKÖRPER SOWIE EINE HEIZKARTUSCHE UND EIN DURCHLAUFERHITZER**
ARRANGEMENT FOR THE DETACHABLE FIXING OF A MEASURING ELEMENT TO A BASE BODY, AS WELL AS A HEATING CARTRIDGE AND A CONTINUOUS FLOW HEATER
DISPOSITIF DE FIXATION AMOVIBLE D'UN ÉLÉMENT DE MESURE SUR UN CORPS DE BASE AINSI QUE CARTOUCHE DE CHAUFFAGE ET CHAUFFE-EAU INSTANTANÉ

(43) Veröffentlichungstag der Anmeldung: 18.09.2024
(73) Patentinhaber: Gerdes Holding GmbH & Co. KG, 21337 Lüneburg (DE)
(72) Erfinder: Schulz, Björn, 21403 Wendish Evern (DE); Cordes, Hans, 21394 Kirchgellersen (DE)
(74) Vertreter: Stork Bamberger Patentanwälte PartmbB

(56) Entgegenhaltungen:
- WO-A1-2012/109760
- CN-U- 202 048 682
- DE-A1- 102020 118 751
- US-A1- 2015 377 658

## Beschreibung

Die Erfindung betrifft eine Anordnung zur lösbaren Befestigung eines Messelements, insbesondere einer Sensoreinheit, an einem Grundkörper, umfassend das Messelement, den Grundkörper mit einer zur zumindest bereichsweisen Aufnahme des Messelements eingerichteten und sich entlang einer Längsachse erstreckenden Ausnehmung, und mindestens ein zur Fixierung des Messelements ausgebildetes und eingerichtetes Fixierelement.

Weiterhin betrifft die Erfindung eine Heizkartusche zum Erwärmen eines Fluids.

Weiter betrifft die Erfindung einen Durchlauferhitzer.

Haushaltsgeräte einschließlich Durchlauferhitzer oder andere Warmwasserbereiter etc. enthalten in der Regel verschiedene automatische oder benutzergesteuerte Einstell- und Auswertungsmöglichkeiten, die mittels geeigneter Elektronik und/oder Sensorik erfasst und/oder eingestellt werden können. So enthalten moderne Haushaltsgeräte des aktuellen Entwicklungsstandes regelmäßig ein oder mehrere Messelemente, z. B. Sensoren, die einen Zustand des Funktionsbereiches eines Haushaltsgerätes erfassen, um eine Einstellbarkeit oder Auswertung des Betriebes des Haushaltsgerätes für den Endverbraucher zu ermöglichen. Solche Haushaltsgeräte umfassen beispielsweise auch eine oder mehrere Benutzerschnittstellenkomponenten wie Regel- oder Messsysteme, die es dem Benutzer ermöglichen, einen Leistungsaspekt des Haushaltsgerätes zu erfassen oder zu steuern.

Damit derartige Haushaltsgeräte entsprechende Parameter durch die Messelemente erfassen können, müssen diese an den vorgesehenen Punkten in dem Haushaltsgerät verlässlich, ortsstabil sowie reproduzierbar angeordnet werden. Je nach Art des Haushaltsgerätes ist es dafür erforderlich, dass die entsprechenden Messelemente gegen auftretende physikalische Kräfte oder Begebenheiten geschützt sind. Sofern derartige Messelemente beispielsweise zur Erfassung der Temperatur und/oder des Drucks in Warmwasserbereitern eingesetzt werden, müssen diese Messelemente in bzw. an den entsprechenden Bauteilen dicht und gegenüber den auftretenden Kräften gesichert werden. Darüber hinaus müssen derartige Messelemente bei Defekten oder Wartungen regelmäßig ausgetauscht oder erneuert werden.

Die Anordnung und Befestigung von Messelementen in Haushaltsgeräten, insbesondere in wasserführenden Haushaltsgeräten wie Durchlauferhitzern, stellt häufig eine Schwachstelle dar, da derartige Befestigungen gegenüber den auftretenden Kräften nicht ausreichend widerstandsfähig sind, nicht ausreichend abdichten oder keine lösbare Anordnung gewährleisten. Bei bestehenden Lösungen sind z. B. die Messelemente stoffschlüssig mit den entsprechenden Bauteilen des Haushaltsgerätes verbunden, wodurch ein Austausch oder eine Wartung erschwert oder gar unmöglich wird.

Weiterhin sind Lösungen zur Befestigung von Messelementen an Bauteilen, insbesondere von Haushaltsgeräten, bekannt, die umfangreiche Bearbeitungsschritte und hohe Bauteilstückzahlen erfordern, was wiederum zu hohen Herstellungskosten und fehlerhaften Fertigungsschritten beiträgt. Darüber hinaus sind Befestigungen von Messelementen bekannt, die weder ausreichenden Kräften oder Temperaturschwankungen standhalten, noch ausreichend korrosionsbeständig sind, was die Lebensdauer deutlich reduziert. Insgesamt führen die bekannten Befestigungen der Messelemente entweder zu einem hohen Bearbeitungsaufwand und damit zu hohen Kosten oder zu einer qualitativ unzureichenden Befestigung der Messelemente und damit zu kurzen Standzeiten oder kostenintensiven Folgeschäden.

In der US 2015/0377658 A1 wird ein Verbindungssystem beschrieben, das eine sichere und schnelle Montage und Demontage eines Sensors ermöglichen soll. Es umfasst eine Sensorkopfanordnung mit einem Detektorgehäuse, das einen internen Kanal und ein offenes distales Ende aufweist. Innerhalb des Kanals befindet sich ein Sensorkopfanschluss mit einem ersten elektrischen Verbindungselement und einer festen Schlüsselkomponente. Außerdem enthält das System eine Sensorpatrone, die teilweise in den Kanal eingeführt werden kann und ein zweites elektrisches Verbindungselement und eine zweite Schlüsselkomponente aufweist. Die Schlüsselkomponenten werden vor der Verbindung der Kontaktglieder ineinandergesteckt.

Aus der DE 10 2020 118 751 A1 ist ein Sicherungselement für eine Steckverbindung, eine Leiterkartenanordnung und eine Sonde, insbesondere für optische Messungen in einem Messmedium, offenbart.

Die WO 2012/109760 A1 offenbart Verfahren und Vorrichtungen zur Integration eines elektromagnetischen Navigationssystems mit einem Werkzeug zur Zielausrichtung. Das System umfasst ein Sensorsystem, einen Feldgenerator, eine Anzeige und einen Computer. Das Sensorsystem wird in einer bestimmten Position an der Zielkomponente befestigt, während der Feldgenerator um die Werkzeugachse drehbar ist.

CN 202048682 U beschreibt eine Heizeinheit für Warmwasserbereiter, die aus einem Heizzylinder mit Heizrohr und Wasserzu- und -ableitungen besteht.

Die bekannten Ausführungen weisen daher den Nachteil auf, dass die Befestigungen von Messelementen an Grundkörpern zeitaufwendig und kostenintensiv sind und dabei unzureichende technische Eigenschaften aufweisen. Darüber hinaus besteht durch mehrfache Demontage bzw. Montage die Gefahr von Beschädigungen an dem Grundkörper, dem Haushaltsgerät und dem Messelement.

Für einen zuverlässigen und störunanfälligen Betrieb eines Messelements ist es von großer Bedeutung, dass das Messelement an der dafür vorgesehenen Befestigungsstelle innerhalb des Grundkörpers sicher befestigt ist. Derartige Grundkörper/Haushaltsgeräte können eine Mehrzahl von Messelementen aufweisen, so dass eine einfache, sorgfältige und zeitsparende Befestigung essentiell ist. Zudem bieten die bekannten Grundkörper in der Regel nur einen geringen Bearbeitungsraum für derartige Messelemente, so dass sich die Befestigung der Messelemente während der Montage regelmäßig problembehaftet sowie zeitaufwendig gestaltet und die Gefahr von Beschädigungen, insbesondere von elektrischen oder elektronischen Bauteilen, innerhalb des Haushaltsgerätes oder des eigentlichen Messelements erhöht werden. Ferner werden häufig Befestigungspositionen gewählt, die keinen optimalen Zugang zur Befestigungsstelle liefern. Aufgrund der schwer zugänglichen Befestigungspositionen, die sich regelmäßig an innenliegenden Bereichen des Grundkörpers befinden, gestaltet sich der Vorgang der Befestigung von Messelementen häufig fehleranfällig und zeitaufwendig.

Es ist daher Aufgabe der vorliegenden Erfindung eine Anordnung zur lösbaren Befestigung eines Messelements an einem Grundkörper bereitzustellen, die einerseits eine zuverlässige Befestigung des Messelements an dem Grundkörper gewährleistet und dabei gleichzeitig schnell und komfortabel auszuführen ist. Die Aufgabe besteht weiterhin darin, eine entsprechenden Heizkartusche sowie einen Durchlauferhitzer bereitzustellen.

Diese Aufgabe wird durch die eingangs genannte Anordnung dadurch gelöst, dass der Grundkörper weiter mindestens ein Schubaufnahmeelement mit mindestens einer Schuböffnung und mindestens einer Rastöffnung umfasst, wobei das mindestens eine Schubaufnahmeelement die Ausnehmung zur Ausbildung einer Schubaufnahme zumindest teilweise überragt, und das Fixierelement umfassend mindestens ein zwischen mindestens einer Rastposition und einer Entrastposition federbewegliches Rastelement und mindestens einen zur zumindest bereichsweisen Anlage mit dem Messelement und/oder dem Schubaufnahmeelement ausgebildeten und eingerichteten Fixierabschnitt, wobei die Schubaufnahme zur zumindest bereichsweisen Aufnahme des Fixierelements ausgebildet und eingerichtet ist, indem das Fixierelement über die Schuböffnung in die Schubaufnahme überführbar ist, um das mindestens eine Rastelement ausgehend von der Entrastposition unter Übergang in die Rastposition zumindest bereichsweise in der mindestens einen Rastöffnung lösbar anzuordnen, wobei das Fixierelement gegen ein selbsttätiges Lösen aus der Schubaufnahme gesichert ist, und wobei das Fixierelement mit dem mindestens einen Fixierabschnitt bei einer zumindest bereichsweisen Anordnung in der Schubaufnahme mit dem Messelement und dem Schubaufnahmeelement derart in Anlage bringbar ist, dass das Messelement im Wesentlichen bewegungshemmend gesichert ist.

Die Anordnung bietet insbesondere eine Möglichkeit zur zuverlässigen, komfortablen und dabei gleichzeitig sicheren Befestigung eines Messelements, insbesondere einer Sensoreinheit, an einem Grundkörper. Dadurch ist eine Möglichkeit zur einfachen und kostengünstigen Montage in Verbindung mit dem Fixierelement gegeben, wodurch vorzugsweise eine werkzeugfreie und dabei gleichzeitig lösbare Befestigung des Messelements sichergestellt ist. Vorteilhafterweise umfasst das Messelement und/oder das Schubaufnahmeelement mindestens einen entsprechenden Abschnitt zur Anlage mit dem mindestens einen Fixierabschnitt des Fixierelements. Das Messelement kann auf diese Weise in dem Grundkörper schnell befestigt werden, wodurch die Montage reduziert werden kann. Anders ausgedrückt wird durch die erfindungsgemäße Anordnung eine sogenannte "Schubladen-Lösung" bereitgestellt, die einen Verrastungsmechanismus zur sicheren aber gleichzeitig lösbaren Befestigung des Messelements bereithält. In bevorzugten Ausführungsformen kann ein einzelner Grundkörper mehrere erfindungsgemäße Anordnungen zur lösbaren Befestigung eines Messelements aufweisen.

Das Schubaufnahmeelement des Grundkörpers mit der Schuböffnung verhindert dabei eine Fehlbedienung bzw. Fehlmontage, da auf diese Weise der Abschnitt zum Einschieben des Fixierelements vorgegeben ist, wodurch das in der Ausnehmung eingesetzte Messelement fixierbar ist. Das Fixierelement ist dabei mit dem mindestens einen Rastelement in die Schuböffnung hineinführbar und in Wirkverbindung mit der mindestens einen Rastöffnung bringbar. Sofern eine Überführung des Fixierelements bzw. des Rastelements in die Rastposition innerhalb der Rastöffnung erfolgt ist, ist die lösbare Befestigung des Messelements erfolgreich ausgeführt worden. Das Rastelement sichert das Fixierelement gegen ein selbsttätiges Lösen aus dem Schubaufnahmeelement, um das Messelement in der Ausnehmung sicher anzuordnen. Das Schubaufnahmeelement bietet im eingesetzten Zustand des Messelements darüber hinaus einen Schutz gegen Beschädigungen, da das Messelement auf diese Weise - zumindest teilweise - abgeschirmt ist. Weiter bietet die Anordnung durch die Ausrichtung des Fixierelements in dem Schubaufnahmeelement eine Durchführung für etwaige weitere Bestandteile des Messelementes, was beispielsweise Kabel sein können.

Die Ausnehmung des Grundkörpers zur zumindest bereichsweisen Aufnahme des Messelements ist vorzugsweise ein sogenannter Dom, der zumindest teilweise einen Hohlkörper aufweist und zur passgenauen Aufnahme des entsprechenden Messelements vorgesehen ist. Das Schubaufnahmeelement überragt die Ausnehmung vorteilhafterweise zumindest derart, dass das Fixierelement mittels der Überragung zur Fixierung des Messelements ausgebildet und eingerichtet ist. Das Fixierelement kann als U-förmige Verrastungsklammer, Verriegelungsklemme, Befestigungsklemme, Befestigungsschelle etc. ausgebildet sein.

Die Ausgestaltung oder Funktionalität des Messelements ist nicht erfindungsrelevant, sofern eine Anordnung in der Ausnehmung des Grundkörpers gegeben ist. Das Messelement kann daher je nach vorgesehenem Einsatzzweck ein entsprechendes Bauteil sein, um die physikalischen oder chemischen Eigenschaften (physikalisch z. B. Wärmemenge, Temperatur, Feuchtigkeit, Druck, Schallfeldgrößen, Helligkeit, Beschleunigung oder chemisch z. B. pH-Wert, Ionenstärke, elektrochemisches Potential) und/oder die stoffliche Beschaffenheit seiner Umgebung qualitativ oder als Messgröße quantitativ zu erfassen bzw. zu messen. Weiter kann der Begriff Messelement darüber hinaus Schalter, z. B. Sicherheitsdruckschalter, umfassen, die bei Überschreiten von vorgegebenen Werten etwaige elektrische oder elektronische Bauteile gezielt abschalten. Vorzugsweise ist das Messelement als Keramiksensor zur Erfassung von Temperatur ausgebildet und eingerichtet. Das Messelement dichtet bevorzugt im eingesetzten und befestigten Zustand die Ausnehmung des Grundkörpers dichtend ab, wozu bei der Anordnung weiter bevorzugt mindestens ein Dichtmittel vorgesehen ist, das z. B. in Anlage mit dem mindestens einen Fixierabschnitt bringbar ist und/oder in der Ausnehmung des Grundkörpers anordenbar ist. In weiteren vorteilhaften Ausführungen kann das Messelement funktionslos sein, das heißt, als Blind-Messelement ausgebildet und eingerichtet sein, um ein Verschließen der Ausnehmung des Grundkörpers bereitzustellen. Dies ist insbesondere dann der Fall, wenn derartige Messelemente nur als Upgrade oder optional in dem entsprechenden Grundkörper vorgesehen sind.

Das Material der erfindungsgemäßen Anordnung, insbesondere des Grundkörpers sowie des Fixiermittels, umfasst vorzugsweise überwiegend Kunststoffe (z. B. ABS, PS, PP etc.), insbesondere dauerhafte Kunststoffe, die entsprechende Festigkeits-, Temperaturbeständigkeits- sowie Dauerhaftigkeitseigenschaften aufweisen. Bevorzugt ist der Grundkörper und/oder das mindestens eine Fixierelement jeweils im Wesentlichen ein (einstückiges) Spritzgussteil.

Eine bevorzugte Ausführungsform ist dadurch gekennzeichnet, dass das mindestens eine Fixierelement zwei Rastelemente umfasst, die zum zumindest bereichsweisen Eingriff mit der mindestens einen Rastöffnung des Schubaufnahmeelements ausgebildet und eingerichtet sind. Durch zwei Rastelemente ist eine Abstützung der Rastelemente an zwei Bereichen des Schubaufnahmeelements gegeben, wodurch die Rastwirkung weiter erhöht ist. Die zwei Rastelemente können insbesondere in jeweils zwei separaten Rastöffnungen des Schubaufnahmeelements anordenbar sein. Dies erhöht einerseits die Kraftverteilung und bietet andererseits eine zusätzliche Absicherung bei einem ungewollten Lösen einer der Verrastungen. In weiteren vorteilhaften Ausführungen kann es darüber hinaus zweckdienlich sein, dass das Fixierelement mehr als zwei Rastelemente umfasst, insbesondere bei großflächigeren Fixierelementen und/oder bei einer zusätzlichen Verrastung in einer anderen Ebene als die Ebene des mindestens einen anderen Rastelements.

Eine vorteilhafte Weiterbildung zeichnet sich dadurch aus, dass die zwei Rastelemente ausgehend von dem mindestens einen Fixierabschnitt sich schenkelförmig erstrecken, wobei die Rastelemente zueinander federbeweglich ausgebildet und eingerichtet sind. Die schenkelförmige Erstreckung der Rastelemente ermöglicht eine Bewegbarkeit der Rastelemente, um die Rastposition sowie die Entrastposition auszuführen. Vorzugsweise befindet sich das Fixierelement in der Ausgangsposition in der Rastposition und kehrt bei einem Überführen in die Entrastposition selbsttätig in die Rastposition zurück. Die Rastelemente und der mindestens eine Fixierabschnitt verlaufen bevorzugt im Wesentlichen in der gleichen Ebene. Weiter bevorzugt ist das Fixierelement im Wesentlichen derart entlang einer Spiegelachse spiegelsymmetrisch ausgebildet und eingerichtet, so dass die zweit Rastelemente und/oder der mindestens eine Fixierabschnitt spiegelsymmetrisch zueinander ausgebildet sind.

In einer weiteren vorteilhaften Ausgestaltung der Erfindung ist in der Rastposition in der Rastöffnung das mindestens eine Rastelement aus der Schubaufnahme herausführbar, indem das mindestens eine Rastelement in die Entrastposition bewegbar ist. Auf diese Weise ist der Befestigungsmechanismus der Anordnung auf einfache Weise lösbar, wodurch das Messelement getauscht werden kann oder ein kurzfristiger Wechsel des Fixierelements bereitgestellt werden kann. Dadurch ist die Flexibilität der Anordnung deutlich erhöht und ein Austausch von Bauteilen kann mit geringem Zeitaufwand und kostengünstig erfolgen.

Eine zweckmäßige Ausgestaltung der Erfindung ist dadurch gekennzeichnet, dass das mindestens eine Fixierelement, insbesondere das mindestens eine Rastelement, mindestens ein Arretiermittel umfasst, wobei das mindestens eine Arretiermittel derart ausgebildet und eingerichtet ist, dass es bei einer zumindest bereichsweisen Anordnung in der Rastöffnung diese hintergreift, um das mindestens eine Rastelement in der Rastöffnung in der Rastposition zu arretieren. Durch das mindestens eine Arretiermittel ist das Rastelement unterstützend in der mindestens einen Rastöffnung des Schubaufnahmeelements anordenbar, wodurch die Befestigung des Messelements zusätzlich erhöht wird. Das mindestens eine Arretiermittel sichert insbesondere ein selbsttätiges Entfernen des Fixiermittels aus der Schubaufnahme. Eine Rückführung des Fixiermittels aus der Schubaufnahme ist dadurch nur möglich, wenn das mindestens eine hintergreifende Arretiermittel aus der mindestens einen Rastöffnung herausgeführt wird, was mittels einer Bewegung der Rastelemente in die Entrastposition bereitstellbar ist. Vorzugsweise ist das mindestens eine Arretiermittel an einem nach außen weisenden Bereich des mindestens einen Rastelements angeordnet. Weiter bevorzugt weist jedes der Rastelemente ein separates Arretiermittel auf, das jeweils zum Hintergreifen einer separaten Rastöffnung des Schubaufnahmeelements ausgebildet und eingerichtet ist.

Eine weitere zweckmäßige Ausgestaltung der Erfindung ist dadurch gekennzeichnet, dass das Fixierelement, insbesondere das mindestens eine Rastelement, bei einer zumindest bereichsweisen Anordnung in der Rastöffnung ein akustisches Signal ausbildet und einrichtet. Dies erhöht weiter die Zuverlässigkeit der Anordnung, da auf diese Weise dem Anwender zumindest akustisch rückgemeldet wird, wenn sich das Fixierelement bzw. das Rastelement in der vorgesehenen Position befindet. Das akustische Signal ist insbesondere selbstständig durch ein Hintergreifen des mindestens einen Arretiermittels des mindestens einen federvorgespannten Rastelements erzeugbar.

Gemäß einer weiteren bevorzugten Ausführungsform der Erfindung weist der mindestens eine Fixierabschnitt des mindestens einen Fixierelements mindestens eine Fixierausnehmung auf, die dazu ausgebildet und eingerichtet ist, einen aus der Ausnehmung des Grundkörpers in Verlauf der Längsachse herausragenden Bereich des Messelements teilweise zu umschließen. Die Fixierausnehmung dient einerseits der zusätzlichen Sicherung des Messelements und ermöglicht darüber hinaus eine zielgerichtete Führung von weiteren Bauteilen des Messelements, beispielsweise von Kabeln. Die Fixierausnehmung ist vorzugsweise im Wesentlichen U-förmig bzw. halbkreisförmig ausgebildet. Weiter bevorzugt wird durch die mindestens eine Fixierausnehmung eine Bewegung des Messelements aus der Ausnehmung des Grundkörpers in Verlauf der Längsachse verhindert.

Eine bevorzugte Weiterbildung der Erfindung zeichnet sich dadurch aus, dass das mindestens eine Fixierelement bei einer Anordnung in der Schubaufnahme das Messelement derart in der Ausnehmung sichert, dass das Messelement kraft -und/oder formschlüssig gegen eine Verschiebbarkeit im Verlauf der Längsachse gesichert ist. Das mindestens eine Arretiermittel verhindert einerseits durch formschlüssige Anordnung in der mindestens einen Rastöffnung eine Bewegung des Fixierelements und das in der Schubaufnahme angeordnete Fixierelement verhindert andererseits durch Anlage mit dem Messelement und dem zumindest teilweise überragend ausgebildeten Schubaufnahmeelement eine Bewegung des Messelements. Dazu ergänzend können weitere kraftschlüssige Verbindungen vorgesehen sein, z. B. schraubförmige Abdeckungen, um eine zusätzliche Befestigung des Messelements auszubilden und einzurichten.

Eine zweckmäßige Ausgestaltung der Erfindung ist dadurch gekennzeichnet, dass das Schubaufnahmeelement zu der dem Grundkörper abgewandten Seite hin zumindest teilweise eine Durchbrechung aufweist, um das Messelement von der dem Grundkörper abgewandten Seite her durch die Durchbrechung des Schubaufnahmeelements hindurch in der Ausnehmung anzuordnen. Die Durchbrechung dient zum einen der komfortablen und schnellen Anordnung des Messelements in der Ausnehmung und zum anderen können etwaige Kabel oder dergleichen durch die Durchbrechung abgeführt und positioniert werden.

Eine vorteilhafte Weiterbildung zeichnet sich dadurch aus, dass die Schubaufnahme eine Schubebene aufspannt, die im Wesentlichen orthogonal zu der Längsachse der Ausnehmung verläuft. Die im Wesentlichen orthogonal verlaufende Schubebene erleichtert die Ausrichtung der erforderlichen Flächen zur Anlage. Weiter ist auf diese Weise eine optimierte und möglichst spaltfreie Anlage zwischen den einzelnen Bauteilen gegeben, um auftretende Kräfte an den gewünschten Bauteilen entsprechend aufzunehmen.

In einer weiteren bevorzugten Weiterbildung der Erfindung ragt die Ausnehmung in einen Fluid führenden Innenraum des Grundkörpers, wobei das Messelement in dem eingesetzten Zustand zumindest teilweise in dem Innenraum anordenbar ist und die Ausnehmung im Wesentlichen verschließt. Dies sichert das Messelement in der Position und ermöglicht einerseits eine sichere Anordnung zur Erlangung reproduzierbarer und einheitlicher Messergebnisse während des Betriebs und andererseits wird auch ein zuverlässiges Verschließen der Ausnehmung des Grundkörpers bereitgestellt. Bei einem Fluid führenden Innenraum ist das Messelement insbesondere als Temperatursensor ausgebildet, um die in dem Innenraum vorherrschende Temperatur des Fluids zuverlässig zu erfassen. Vorzugsweise ist das Messelement passend zu der Ausnehmung ausgebildet bzw. umfasst zumindest bereichsweise eine Oberfläche, die so ausgebildet und eingerichtet ist, dass sie die Ausnehmung im Wesentlichen vollständig verschließt.

Die Aufgabe wird auch durch die eingangs erwähnte erfindungsgemäßen Heizkartusche gelöst, umfassend mindestens eine erfindungsgemäße Anordnung. Dies ermöglicht insbesondere eine zuverlässige, einfache und sichere Anordnung des Messelements. Das Messelement ist dabei vorzugsweise ein an eine Heizkartusche angepasstes Messelement, zur Erfassung/zum Messen von Parameter für den Betrieb einer Heizkartusche, insbesondere von Temperatur.

Zur Vermeidung von Wiederholungen wird im Zusammenhang mit der erfindungsgemäßen Heizkartusche insbesondere auch auf die bereits im Zusammenhang mit der erfindungsgemäßen Anordnung geschilderten Vorzüge verwiesen. Diese gelten in analoger Weise auch für die erfindungsgemäße Heizkartusche.

Die Aufgabe wird weiter durch den eingangs genannten erfindungsgemäßen Durchlauferhitzer gelöst, umfassend eine Heizkartusche mit mindestens einer erfindungsgemäßen Anordnung. Dies ermöglicht insbesondere eine zuverlässige, einfache und sichere Anordnung des Messelements in der Heizkartusche des Durchlauferhitzers. Das Messelement ist dabei vorzugsweise ein an eine Heizkartusche eines Durchlauferhitzers angepasstes Messelement, zur Erfassung/zum Messen von Parameter, insbesondere von Temperatur, für den Betrieb einer Heizkartusche bzw. eines Durchlauferhitzers.

Zur Vermeidung von Wiederholungen wird im Zusammenhang mit dem erfindungsgemäßen Durchlauferhitzer insbesondere auch auf die bereits im Zusammenhang mit der erfindungsgemäßen Anordnung sowie der erfindungsgemäßen Heizkartusche geschilderten Vorzüge verwiesen. Diese gelten in analoger Weise auch für den erfindungsgemäßen Durchlauferhitzer.

Weitere zweckmäßige und/oder vorteilhafte Merkmale und Weiterbildungen sowie bevorzugte Gegenstände der erfindungsgemäßen Anordnung, der erfindungsgemäßen Heizkartusche sowie des erfindungsgemäßen Durchlauferhitzers ergeben sich aus den Unteransprüchen und der Beschreibung. Besonders bevorzugte Ausführungsformen der Anordnung, der Heizkartusche und des Durchlauferhitzers werden anhand der beigefügten Zeichnungen näher erläutert. In den Zeichnungen zeigen:
- Fig. 1: eine schematische Darstellung einer erfindungsgemäßen Anordnung bzw. eine erfindungsgemäße Heizkartusche mit einem Fixierelement in perspektivischer Ansicht,
- Fig. 2a: eine schematische Draufsicht der in Fig. 1 gezeigten erfindungsgemäßen Anordnung bzw. der erfindungsgemäßen Heizkartusche mit einem gelösten Fixierelement,
- Fig. 2b: eine schematische Draufsicht der in Fig. 2a gezeigten erfindungsgemäßen Anordnung bzw. der erfindungsgemäßen Heizkartusche mit einem teilweise eingeschobenen Fixierelement,
- Fig. 2c: eine schematische Draufsicht der in Fig. 2a und Fig. 2b gezeigten erfindungsgemäßen Anordnung bzw. der erfindungsgemäßen Heizkartusche mit einem eingeschobenen Fixierelement und einem befestigten Messelement,
- Fig. 3a: eine schematische Detailansicht eines Fixierelements der erfindungsgemäßen Anordnung in einer Rastposition und
- Fig. 3b: eine schematische Detailansicht des in Fig. 3a gezeigten Fixierelements in einer Entrastposition.

Anhand der vorgenannten Figuren wird die erfindungsgemäße Anordnung, die erfindungsgemäße Heizkartusche sowie der erfindungsgemäße Durchlauferhitzer näher beschrieben.

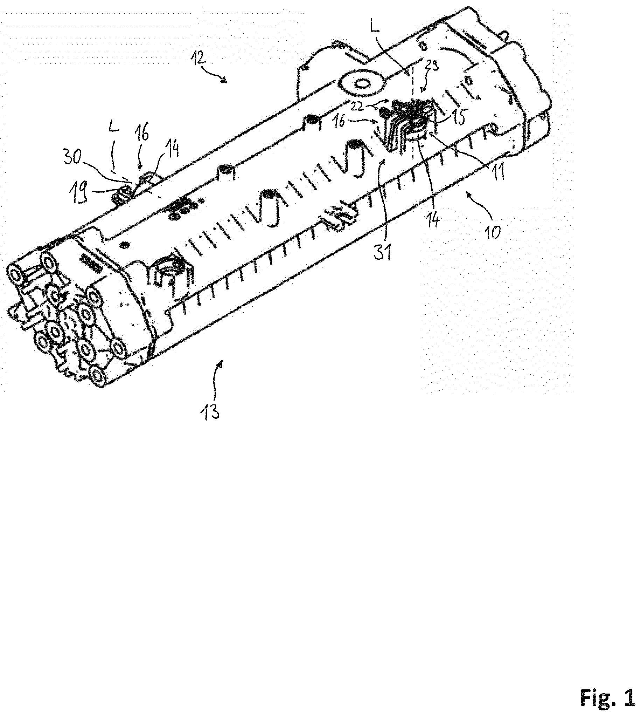

Die in den Zeichnungen dargestellte Anordnung 10 ist zur lösbaren Befestigung eines Messelements 11, insbesondere einer Sensoreinheit, an einem Grundkörper 12 ausgebildet und eingerichtet. Der Grundkörper ist dabei, wie der Fig. 1 zu entnehmen ist, exemplarisch als Heizkartusche 13 eines - in den Figuren nicht separat dargestellten - Durchlauferhitzers ausgebildet. Die Erfindung bezieht sich in gleicher Weise auf vergleichbare Grundkörper 12, die ebenfalls zur lösbaren Befestigung eines Messelements 11 vorgesehen sind.

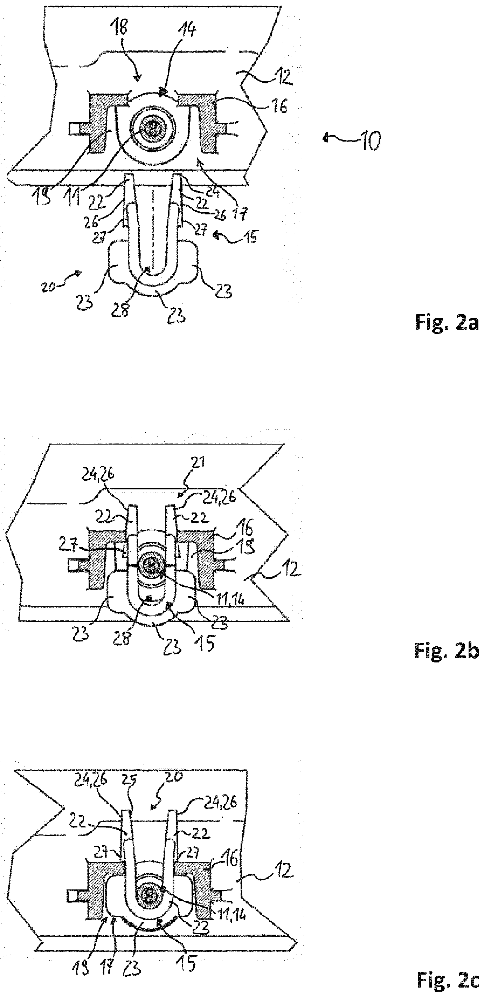

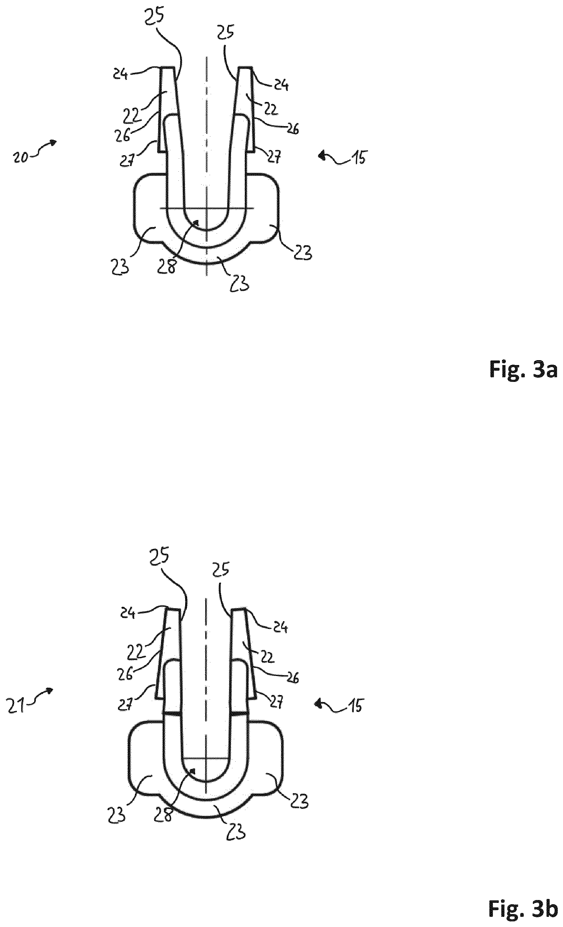

Fig. 1 zeigt schematisch eine Ausführungsform einer Heizkartusche 13 mit einer erfindungsgemäßen Anordnung 10. Derartige Heizkartuschen 13 sind regelmäßig Bestandteile von (elektrischen) Durchlauferhitzern und zur Erwärmung von Wasser vorgesehen. Zur Überwachung der Warmwassererzeugung innerhalb der Heizkartusche werden beispielsweise die Messelemente 11 verwendet, wobei ebenfalls weitere Messungen vorgenommen werden können. Die erfindungsgemäße Anordnung 10 umfasst das Messelement 11, den Grundkörper 12 mit einer zur zumindest bereichsweisen Aufnahme des Messelements 11 eingerichteten und sich entlang einer Längsachse L erstreckenden Ausnehmung 14, und mindestens ein zur Fixierung des Messelements 11 ausgebildetes und eingerichtetes Fixierelement 15. Eine Ausführungsform des Fixierelements 15 ist jeweils in den Fig. 3a und Fig. 3b gezeigt. Weiter ist in den Fig. 2a, Fig. 2b und Fig. 2c das Fixierelement 15 bei den unterschiedlichen Schritten während des Befestigens des Messelements 11 gezeigt.

Der Grundkörper 12 umfasst weiter mindestens ein Schubaufnahmeelement 16 mit mindestens einer Schuböffnung 17 und mindestens einer Rastöffnung 18, wobei das mindestens eine Schubaufnahmeelement 16 die Ausnehmung 14 zur Ausbildung einer Schubaufnahme 19 zumindest teilweise überragt. Die in der Fig. 1 gezeigte Heizkartusche weist zwei Schubaufnahmeelemente 16 mit einer Ausnehmung 14 auf, die jeweils zur Aufnahme eines Messelements 11 und zur Ausbildung einer erfindungsgemäßen Anordnung 10 vorgesehen sind. In den Draufsichten der Fig. 2a, Fig. 2b und Fig. 2c ist das Schubaufnahmeelement 16 in einer teilweisen Schnittansicht gezeigt. Der überragende Bereich des Schubaufnahmeelements 16 ist in den Fig. 2 a, Fig. 2b und Fig. 2c nicht dargestellt. Das Schubaufnahmeelement 16 ist bevorzugt einstückig mit dem Grundkörper 12 ausgebildet.

Weiter umfasst das Fixierelement 15 mindestens ein zwischen mindestens einer Rastposition 20 und einer Entrastposition 21 federbewegliches Rastelement 22 und mindestens einen zur zumindest bereichsweisen Anlage mit dem Messelement 44 und/oder dem Schubaufnahmeelement 16 ausgebildeten und eingerichteten Fixierabschnitt 23. In den Fig. 2b und Fig. 3a ist das Fixierelement 15 in der Rastposition 20 dargestellt und in den Fig. 2a, Fig. 2c und Fig. 3b ist das Fixierelement 15 in der Entrastposition 21 gezeigt. Das mindestens eine Rastelement 22 ist bevorzugt zum freien Ende 24 hin sich verjüngend ausgebildet und eingerichtet, wodurch unter anderem ein vereinfachter Zugang in die Rastöffnung 18 ermöglicht ist.

Die Schubaufnahme 19 ist zur zumindest bereichsweisen Aufnahme des Fixierelements 15 ausgebildet und eingerichtet, indem das Fixierelement 15 über die Schuböffnung 17 in die Schubaufnahme 19 überführbar ist, um das mindestens eine Rastelement ausgehend von der Entrastposition 21 unter Übergang in die Rastposition 20 zumindest bereichsweise in der mindestens einen Rastöffnung 18 lösbar anzuordnen, wobei das Fixierelement 15 gegen ein selbsttätiges Lösen aus der Schubaufnahme 19 gesichert ist und wobei das Fixierelement 15 mit dem mindestens einen Fixierabschnitt 23 bei einer zumindest bereichsweisen Anordnung in der Schubaufnahme 19 mit dem Messelement 11 und dem Schubaufnahmeelement 16 derart in Anlage bringbar ist, dass das Messelement 11 im Wesentlichen bewegungshemmend gesichert ist. Die Schuböffnung 17 stellt dabei die Öffnung dar, um das Fixierelement 15 in der Schubaufnahme 19 bereitzustellen (siehe Fig. 2a). In der Fig. 2b befindet sich das Fixierelement 15 teilweise in der Schubaufnahme 19, während ein Teil des Fixierelements 15, insbesondere ein Teil des mindestens einen Rastelements 22, in dem Ausführungsbeispiel sind zwei Rastelemente 22 vorgesehen, aus der Rastöffnung 18 hinausragt. In der Fig. 2c ist das Fixierelement 15 bestimmungsgemäß innerhalb der Schubaufnahme 19 angeordnet und das mindestens eine Rastelement 22 ist verrastet in der Rastöffnung 18 angeordnet. Das Fixierelement 15 sichert durch zumindest bereichsweise Anlage des Fixierabschnitts 23 mit dem Messelement 11 und dem Schubaufnahmeelement 16 das Messelement 11 mit dem Grundkörper 12 bzw. in der Schubaufnahme 19. Vorzugsweise bildet der überragende Bereich der Schubaufnahme 19 eine Gegenlage für den Fixierabschnitt 23, um das Messelement 11 bewegungshemmend zu sichern.

Eine vorteilhafte Ausführungsform zeichnet sich dadurch aus, dass das mindestens eine Fixierelement 15 zwei Rastelemente 22 umfasst, die zum zumindest bereichsweisen Eingriff mit der mindestens einen Rastöffnung 18 des Schubaufnahmeelements 16 ausgebildet und eingerichtet sind. In den Fig. 2 a, Fig. 2b und Fig. 2c und Fig. 3a und Fig. 3b sind jeweils Fixierelemente 15 mit jeweils zwei Rastelementen 22 gezeigt. Vorzugsweise ist in der Rastposition 20 der innenliegende Abschnitt 25 des mindestens einen Rastelements 22 nach außen gewinkelt ausgebildet und der außenliegende Abschnitt 26 des mindestens einen Rastelements 22 verläuft im Wesentlichen parallel zur Längserstreckung des Rastelements 22 (siehe Fig. 2a, Fig. 2c und Fig. 3a). Weiter bevorzugt verläuft in der Entrastposition 21 der innenliegende Abschnitt 25 des mindestens einen Rastelements 22 im Wesentlichen parallel zur Längserstreckung des Rastelements 22 und der außenliegende Abschnitt 26 des mindestens einen Rastelements 22 ist im Wesentlichen nach innen gewinkelt ausgebildet (siehe Fig. 2b und Fig. 3b). Wie in den Fig. 2 a, Fig. 2b, Fig. 2c sowie Fig. 3a und Fig. 3b gezeigt, erstrecken sich die zwei Rastelemente 22 vorzugsweise ausgehend von dem mindestens einen Fixierabschnitt 23 schenkelförmig, wobei die Rastelemente 22 zueinander federbeweglich ausgebildet und eingerichtet sind. Vorteilhafterweise ist in der Rastposition 20 in der Rastöffnung 18 das mindestens eine Rastelement 22 aus der Schubaufnahme 19 herausführbar, indem das mindestens eine Rastelement 22 in die Entrastposition 21 bewegbar ist. Der Vorgang der Überführbarkeit des mindestens einen Fixierelements 15 aus oder in die Rastöffnung 18 ist in der Fig. 2b im Detail dargestellt. Hierzu sind die Rastelemente 22, insbesondere im Bereich der freien Enden 24, ausgehend von dem außenliegenden Abschnitt 26 in Richtung des innenliegenden Abschnitts 25 bewegbar, wodurch der Positionswechsel von der Rastposition 20 in die Entrastposition 21 ausführbar ist.

In einer bevorzugten Ausführungsform umfasst das mindestens eine Fixierelement 15, insbesondere das mindestens eine Rastelement 22, mindestens ein Arretiermittel 27, wobei das mindestens eine Arretiermittel 27 derart ausgebildet und eingerichtet ist, dass es bei einer zumindest bereichsweisen Anordnung in der Rastöffnung 18 diese hintergreift, um das mindestens eine Rastelement 22 in der Rastöffnung 18 in der Rastposition 20 zu arretieren. Das Arretiermittel 27 kann vorzugsweise ein Abschnitt des Rastelements 22 sein, insbesondere eine Materialerhöhung, eine Aussparung etc. In der Fig. 2c hintergreift das Arretiermittel 27 einen Bereich der Rastöffnung 18 bzw. des Schubaufnahmeelements 16, wodurch das Fixierelement 15 in der Schubaufnahme 19 arretiert ist und eine selbsttätige Bewegung des Fixierelements 15 blockiert ist. Vorzugsweise bildet das Fixierelement 15, insbesondere das mindestens eine Rastelement 22, bei einer zumindest bereichsweisen Anordnung in der Rastöffnung 18 ein akustisches Signal aus. Das akustische Signal entsteht bevorzugt durch Zurückschnappen des mindestens einen Rastelements 22 in der Rastöffnung 18 aus der Entrastposition 21 in die Rastposition 20. Weiter bevorzugt sichert das mindestens eine Fixierelement 15 bei einer Anordnung in der Schubaufnahme 19 das Messelement 11 derart in der Ausnehmung 14, dass das Messelement 11 kraft -und/oder formschlüssig gegen eine Verschiebbarkeit im Verlauf der Längsachse L gesichert ist.

In einer vorteilhaften Ausführungsform weist der mindestens eine Fixierabschnitt 23 des mindestens einen Fixierelements 15 mindestens eine Fixierausnehmung 28 auf, die dazu ausgebildet und eingerichtet ist, einen aus der Ausnehmung 14 des Grundkörpers 12 im Verlauf der Längsachse L herausragenden Bereich des Messelements 11 teilweise zu umschließen. In den Fig. 2 a, Fig. 2b, Fig. 2c sowie Fig. 3a und Fig. 3b ist die Fixierausnehmung 28 des Fixierelements 15 im Wesentlichen U-förmig ausgebildet. Dies ist insbesondere für Messelemente 11 mit einem im Wesentlichen kreisförmigen Durchmesser bzw. Fixierbereich oder Abschnitt zur Anlage mit dem Fixierabschnitt 23 zweckdienlich. In weiteren vorteilhaften Ausführungsformen kann die Fixierausnehmung 28 beispielsweise eckig sein. Die Fixierausnehmung 28 umschließt oder überdeckt das Messelement 11 zumindest derart, dass ein unerwünschtes Entfernen in Richtung der Längsachse L verhindert ist. Vorzugsweise umfasst das Messelement 11 mindestens einen - in den Figuren nicht im Detail dargestellten - Auflageabschnitt, der zur Anlage und Fixierung durch das mindestens eine Fixierelement 15 in dem Schubaufnahmeelement 16 bzw. in der Schubaufnahme 19 ausgebildet und eingerichtet ist. In Verbindung mit dem mindestens einen Fixierelement 15 mit dem mindestens einen federbeweglichen Rastelement 15 ist das Messelement 11 in der Rastposition 20 lösbar in der Schubaufnahme 19 arretierbar.

In einer weiteren bevorzugten Ausführungsform weist das Schubaufnahmeelement 16 zu der dem Grundkörper 12 abgewandten Seite 29 hin zumindest teilweise eine Durchbrechung 30 auf, um das Messelement 11 von der dem Grundkörper 12 abgewandten Seite her durch die Durchbrechung 30 des Schubaufnahmeelements 16 hindurch in der Ausnehmung 14 anzuordnen. Vorzugsweise erfolgt zunächst ein Einsetzen des Messelements 11 durch die Durchbrechung 30 von der dem Grundkörper 12 abgewandten Seite 29 und anschließend eine Befestigung des Messelements 11 durch das Fixierelement 15. Weiter bevorzugt spannt die Schubaufnahme 19 eine Schubebene auf, die im Wesentlichen orthogonal zu der Längsachse L der Ausnehmung 14 verläuft.

Eine vorteilhafte Ausführungsform zeichnet sich dadurch aus, dass die Ausnehmung 14 in einen Fluid führenden Innenraum 31 des Grundkörpers 12 ragt, wobei das Messelement 11 in dem eingesetzten Zustand zumindest teilweise in dem Innenraum 31 anordenbar ist und die Ausnehmung 14 im Wesentlichen verschließt. Wie in der Fig. 1 der Heizkartusche 13 gezeigt ist, kann ein einzelner Grundkörper 12 mehrere erfindungsgemäße Anordnungen 10 umfassen.

Die vorgenannten Ausführungen im Zusammenhang mit der erfindungsgemäßen Anordnung 10 beziehen sich in gleicher Weise auf die erfindungsgemäße Heizkartusche 13 zum Erwärmen eines Fluids, umfassend mindestens eine erfindungsgemäße Anordnung 10. Die vorgenannten Ausführungen beziehen sich ebenfalls auf einen Durchlauferhitzer umfassend mindestens eine Heizkartusche 13 mit mindestens einer erfindungsgemäßen Anordnung 10.

## Patentansprüche

1. Anordnung (10) zur lösbaren Befestigung eines Messelements (11), insbesondere einer Sensoreinheit, an einem Grundkörper (12), umfassend
das Messelement (11), den Grundkörper (12) mit einer zur zumindest bereichsweisen Aufnahme des Messelements (11) eingerichteten und sich entlang einer Längsachse (L) erstreckenden Ausnehmung (14), und mindestens ein zur Fixierung des Messelements (11) ausgebildetes und eingerichtetes Fixierelement (15),
wobei der Grundkörper (12) weiter mindestens ein Schubaufnahmeelement (16) mit mindestens einer Schuböffnung (17) und mindestens einer Rastöffnung (18) umfasst, wobei das mindestens eine Schubaufnahmeelement (16) die Ausnehmung (14) zur Ausbildung einer Schubaufnahme (19) zumindest teilweise überragt,
und das Fixierelement (15) umfassend mindestens ein zwischen mindestens einer Rastposition (20) und einer Entrastposition (21) federbewegliches Rastelement (22) und mindestens einen zur zumindest bereichsweisen Anlage mit dem Messelement (11) und/oder dem Schubaufnahmeelement (16) ausgebildeten und eingerichteten Fixierabschnitt (23),
wobei die Schubaufnahme (19) zur zumindest bereichsweisen Aufnahme des Fixierelements (15) ausgebildet und eingerichtet ist, indem das Fixierelement (15) über die Schuböffnung (17) in die Schubaufnahme (19) überführbar ist, um das mindestens eine Rastelement (22) ausgehend von der Entrastposition (21) unter Übergang in die Rastposition (20) zumindest bereichsweise in der mindestens einen Rastöffnung (18) lösbar anzuordnen, wobei das Fixierelement (15) gegen ein selbsttätiges Lösen aus der Schubaufnahme (19) gesichert ist,
und wobei das Fixierelement (15) mit dem mindestens einen Fixierabschnitt (23) bei einer zumindest bereichsweisen Anordnung in der Schubaufnahme (19) mit dem Messelement (11) und dem Schubaufnahmeelement (16) derart in Anlage bringbar ist, dass das Messelement (11) im Wesentlichen bewegungshemmend gesichert ist.

2. Anordnung (10) nach Anspruch 1, **dadurch gekennzeichnet, dass** das mindestens eine Fixierelement zwei Rastelemente (22) umfasst, die zum zumindest bereichsweisen Eingriff mit der mindestens einen Rastöffnung (18) des Schubaufnahmeelements (16) ausgebildet und eingerichtet sind.

3. Anordnung (10) nach Anspruch 2, **dadurch gekennzeichnet, dass** die zwei Rastelemente (22) ausgehend von dem mindestens einen Fixierabschnitt (23) sich schenkelförmig erstrecken, wobei die Rastelemente (22) zueinander federbeweglich ausgebildet und eingerichtet sind.

4. Anordnung (10) nach einem oder mehreren der Ansprüche 1 bis 3, **dadurch gekennzeichnet, dass** in der Rastposition (20) in der Rastöffnung (18) das mindestens eine Rastelement (22) aus der Schubaufnahme (19) herausführbar ist, indem das mindestens eine Rastelement (22) in die Entrastposition (21) bewegbar ist.

5. Anordnung (10) nach einem oder mehreren der Ansprüche 1 bis 4, **dadurch gekennzeichnet, dass** das mindestens eine Fixierelement (15), insbesondere das mindestens eine Rastelement (22), mindestens ein Arretiermittel (27) umfasst, wobei das mindestens eine Arretiermittel (27) derart ausgebildet und eingerichtet ist, dass es bei einer zumindest bereichsweisen Anordnung in der Rastöffnung (18) diese hintergreift, um das mindestens eine Rastelement (22) in der Rastöffnung (18) in der Rastposition (20) zu arretieren.

6. Anordnung (10) nach Anspruch 5, **dadurch gekennzeichnet, dass** das Fixierelement (15), insbesondere das mindestens eine Rastelement (22), bei einer zumindest bereichsweisen Anordnung in der Rastöffnung (18) ein akustisches Signal ausbildet und einrichtet.

7. Anordnung (10) nach einem oder mehreren der Ansprüche 1 bis 6, **dadurch gekennzeichnet, dass** der mindestens eine Fixierabschnitt (23) des mindestens einen Fixierelements (15) mindestens eine Fixierausnehmung (28) aufweist, die dazu ausgebildet und eingerichtet ist, einen aus der Ausnehmung (14) des Grundkörpers (12) im Verlauf der Längsachse (L) herausragenden Bereich des Messelements (11) teilweise zu umschließen.

8. Anordnung (10) nach einem oder mehreren der Ansprüche 1 bis 7, **dadurch gekennzeichnet, dass** das mindestens eine Fixierelement (15) bei einer Anordnung in der Schubaufnahme (19) das Messelement (11) derart in der Ausnehmung (14) sichert, dass das Messelement (11) kraft -und/oder formschlüssig gegen eine Verschiebbarkeit im Verlauf der Längsachse (L) gesichert ist.

9. Anordnung (10) nach einem oder mehreren der Ansprüche 1 bis 8, **dadurch gekennzeichnet, dass** das Schubaufnahmeelement (16) zu der dem Grundkörper (12) abgewandten Seite (29) hin zumindest teilweise eine Durchbrechung (30) aufweist, um das Messelement (11) von der dem Grundkörper (12) abgewandten Seite (29) her durch die Durchbrechung (30) des Schubaufnahmeelements (16) hindurch in der Ausnehmung (14) anzuordnen.

10. Anordnung (10) nach einem oder mehreren der Ansprüche 1 bis 9, **dadurch gekennzeichnet, dass** die Schubaufnahme (19) eine Schubebene aufspannt, die im Wesentlichen orthogonal zu der Längsachse (L) der Ausnehmung (14) verläuft.

11. Anordnung (10) nach einem oder mehreren der Ansprüche 1 bis 10, **dadurch gekennzeichnet, dass** die Ausnehmung (14) in einen Fluid führenden Innenraum (31) des Grundkörpers (12) ragt, wobei das Messelement (11) in dem eingesetzten Zustand zumindest teilweise in dem Innenraum (31) anordenbar ist und die Ausnehmung (14) im Wesentlichen verschließt.

12. Heizkartusche (13) zum Erwärmen eines Fluids, umfassend mindestens eine Anordnung (10) nach einem oder mehreren der Ansprüche 1 bis 11.

13. Durchlauferhitzer umfassend mindestens eine Heizkartusche (13) nach Anspruch

## Claims

1. An arrangement (10) for the releasable fastening of a measuring element (11), in particular of a sensor unit, to a base body (12), comprising:
the measuring element (11), the base body (12) having an opening (14) adapted for the at least partial receiving of the measuring element (11) and extending along a longitudinal axis (L), and at least one fastening element (15) configured and adapted for the fixing of the measuring element (11),
wherein the base body (12) further comprises at least one slide-receiving element (16) having at least one slide-opening (17) and at least one latching opening (18), wherein the at least one slide-receiving element (16) at least partially projects over the opening (14) to form a slide-receptacle (19),
and the fastening element (15) comprising at least one latching member (22) spring-biased between a latching position (20) and a release position (21) and at least one fastening section (23) configured and adapted for the at least partial abutment against the measuring element (11) and/or the slide-receiving element (16),
wherein the slide-receptacle (19) is configured and adapted for the at least partial receiving of the fastening element (15) in that the fastening element (15) is transferable via the slide-opening (17) into the slide-receptacle (19) in order to releasably arrange the at least one latching member (22) starting from the release position (21) under transition into the latching position (20) at least partially in the at least one latching opening (18), the fastening element (15) being secured against an automatic release from the slide-receptacle (19) by a self-acting release, and
wherein the fastening element (15) having the at least one fastening section (23) in an at least partial arrangement in the slide-receptacle (19) can be brought into abutment with the measuring element (11) and the slide-receiving element (16) such that the measuring element (11) is secured in an essentially movementinhibiting manner.

2. Arrangement (10) according to claim 1, **characterized in that** the at least one fastening element (15) comprises two latching members (22) configured and adapted for the at least partial engagement with the at least one latching opening (18) of the slide-receiving element (16).

3. Arrangement (10) according to claim 2, **characterized in that** the two latching members (22) starting from the at least one fastening section (23) extend in a bracket-like manner, wherein the latching members (22) are configured spring-biased relative to each other and are adapted.

4. Arrangement (10) according to one or more of claims 1 to 3, **characterized in that** in the latching position (20) in the latching opening (18) the at least one latching member (22) can be guided out of the slide-receptacle (19) **in that** the at least one latching member (22) is movable into the release position (21).

5. Arrangement (10) according to one or more of claims 1 to 4, **characterized in that** the at least one fastening element (15), in particular the at least one latching member (22), comprises at least one locking means (27), wherein the at least one locking means (27) is configured and adapted in such a way that in an at least partial arrangement in the latching opening (18) it engages behind the latter in order to lock the at least one latching member (22) in the latching position (20) in the latching opening (18).

6. Arrangement (10) according to claim 5, **characterized in that** the fastening element (15), in particular the at least one latching member (22), in an at least partial arrangement in the latching opening (18) adapts and configures an acoustic signal.

7. Arrangement (10) according to one or more of claims 1 to 6, **characterized in that** the at least one fastening section (23) of the at least one fastening element (15) has at least one fastening recess (28) which is configured and adapted to partially enclose a region of the measuring element (11) protruding along the longitudinal axis (L) from the opening (14) of the base body (12).

8. Arrangement (10) according to one or more of claims 1 to 7, **characterized in that** the at least one fastening element (15) in an arrangement in the slide-receptacle (19) secures the measuring element (11) in the opening in such a way that the measuring element (11) is secured in a force-fitting and/or form-fitting manner against a displaceability along the longitudinal axis (L).

9. Arrangement (10) according to one or more of claims 1 to 8, **characterized in that** the slide-receiving element (16) on the side (29) facing away from the base body (12) has at least partially a through-opening (30) in order to arrange the measuring element (11) from the side facing away from the base body (12) through the through-opening of the slide-receiving element (16) into the opening (14).

10. Arrangement (10) according to one or more of claims 1 to 9, **characterized in that** the slide-receptacle (19) spans a slide-plane which runs essentially orthogonally to the longitudinal axis (L) of the opening (14).

11. Arrangement (10) according to one or more of claims 1 to 10, **characterized in that** the opening (14) projects into a fluid-conducting interior (31) of the base body (12), wherein the measuring element (11) in the inserted state is arrangeable at least partially in the interior (31) and essentially closes the opening (14).

12. Heating cartridge (13) for the heating of a fluid, comprising at least one arrangement (10) according to one or more of claims 1 to 11.

13. Instantaneous water heater comprising at least one heating cartridge (13) according to claim 12.

## Revendications

1. Agencement (10) pour la fixation amovible d'un élément de mesure (11), notamment d'une unité de capteur, sur un corps de base (12), comprenant
l'élément de mesure (11), le corps de base (12) avec un évidement (14), adapté pour recevoir au moins par zones l'élément de mesure (11) et s'étendant le long d'un axe longitudinal (L), et au moins un élément de fixation (15), configuré et adapté pour fixer l'élément de mesure (11),
le corps de base (12) comprenant en outre au moins un élément de réception de coulissement (16) avec au moins une ouverture de coulissement (17) et au moins une ouverture d'encliquetage (18), l'au moins un élément de réception de coulissement (16) dépassant au moins partiellement l'évidement (14) pour configurer un réceptacle de coulissement (19),
et l'élément de fixation (15) comprenant au moins un élément d'encliquetage (22) mobile élastiquement entre au moins une position d'encliquetage (20) et une position de désencliquetage (21), ainsi qu'au moins une section de fixation (23), configurée et adaptée pour venir au moins par zones en appui contre l'élément de mesure (11) et/ou l'élément de réception de coulissement (16),
le réceptacle de coulissement (19) étant configuré et adapté pour recevoir au moins par zones l'élément de fixation (15), par le fait que l'élément de fixation (15) peut être transféré dans le réceptacle de coulissement (19) via l'ouverture de coulissement (17), afin d'agencer de manière amovible l'au moins un élément d'encliquetage (22), à partir de la position de désencliquetage (21), avec passage dans la position d'encliquetage (20), au moins par zones dans l'au moins une ouverture d'encliquetage (18), l'élément de fixation (15) étant sécurisé contre un désengagement automatique hors du réceptacle de coulissement (19),
et l'élément de fixation (15), avec l'au moins une section de fixation (23), pouvant être amené, lors d'un agencement au moins par zones dans le réceptacle de coulissement (19), en appui contre l'élément de mesure (11) et l'élément de réception de coulissement (16), de telle sorte que l'élément de mesure (11) est sécurisé de manière essentiellement à empêcher son déplacement.

2. Agencement (10) selon la revendication 1, **caractérisé en ce que** l'au moins un élément de fixation comprend deux éléments d'encliquetage (22), qui sont configurés et adaptés pour venir au moins par zones en prise avec l'au moins une ouverture d'encliquetage (18) de l'élément de réception de coulissement (16).

3. Agencement (10) selon la revendication 2, **caractérisé en ce que** les deux éléments d'encliquetage (22) s'étendent en forme de branches à partir de l'au moins une section de fixation (23), les éléments d'encliquetage (22) étant configurés et adaptés pour être mobiles élastiquement l'un par rapport à l'autre.

4. Agencement (10) selon une ou plusieurs des revendications 1 à 3, **caractérisé en ce que**, dans la position d'encliquetage (20), l'au moins un élément d'encliquetage (22) peut être retiré du réceptacle de coulissement (19) dans l'ouverture d'encliquetage (18), par le fait que l'au moins un élément d'encliquetage (22) peut être déplacé vers la position de désencliquetage (21).

5. Agencement (10) selon une ou plusieurs des revendications 1 à 4, **caractérisé en ce que** l'au moins un élément de fixation (15), notamment l'au moins un élément d'encliquetage (22), comprend au moins un moyen de blocage (27), l'au moins un moyen de blocage (27) étant configuré et adapté de telle sorte que, lors d'un agencement au moins par zones dans l'ouverture d'encliquetage (18), il vient derrière celle-ci afin de bloquer l'au moins un élément d'encliquetage (22) dans l'ouverture d'encliquetage (18) dans la position d'encliquetage (20).

6. Agencement (10) selon la revendication 5, **caractérisé en ce que** l'élément de fixation (15), notamment l'au moins un élément d'encliquetage (22), configure et adapte un signal acoustique lors d'un agencement au moins par zones dans l'ouverture d'encliquetage (18).

7. Agencement (10) selon une ou plusieurs des revendications 1 à 6, **caractérisé en ce que** l'au moins une section de fixation (23) de l'au moins un élément de fixation (15) présente au moins un évidement de fixation (28), qui est configuré et adapté pour entourer partiellement une zone de l'élément de mesure (11) faisant saillie hors de l'évidement (14) du corps de base (12) le long de l'axe longitudinal (L).

8. Agencement (10) selon une ou plusieurs des revendications 1 à 7, **caractérisé en ce que** l'au moins un élément de fixation (15), lors d'un agencement dans le réceptacle de coulissement (19), sécurise l'élément de mesure (11) dans l'évidement (14) de telle sorte que l'élément de mesure (11) est sécurisé par adhérence et/ou par complémentarité de forme contre une possibilité de déplacement le long de l'axe longitudinal (L).

9. Agencement (10) selon une ou plusieurs des revendications 1 à 8, **caractérisé en ce que** l'élément de réception de coulissement (16) présente, vers le côté (29) détourné du corps de base (12), au moins partiellement un orifice traversant (30), afin d'agencer l'élément de mesure (11), depuis le côté (29) détourné du corps de base (12), dans l'évidement (14) à travers l'orifice traversant (30) de l'élément de réception de coulissement (16).

10. Agencement (10) selon une ou plusieurs des revendications 1 à 9, **caractérisé en ce que** le réceptacle de coulissement (19) définit un plan de coulissement qui s'étend essentiellement orthogonalement à l'axe longitudinal (L) de l'évidement (14).

11. Agencement (10) selon une ou plusieurs des revendications 1 à 10, **caractérisé en ce que** l'évidement (14) pénètre dans un espace intérieur (31) du corps de base (12) conduisant un fluide, l'élément de mesure (11), à l'état inséré, pouvant être agencé au moins partiellement dans l'espace intérieur (31) et fermant essentiellement l'évidement (14).

12. Cartouche chauffante (13) pour le chauffage d'un fluide, comprenant au moins un agencement (10) selon une ou plusieurs des revendications 1 à 11.

13. Chauffe-eau instantané comprenant au moins une cartouche chauffante (13) selon la revendication 12.
